# EUROPÄISCHE PATENTSCHRIFT

(11) **EP 0 697 551 B1**
(45) Veröffentlichungstag und Bekanntmachung des Hinweises auf die Patenterteilung: **25.11.1998**
(21) Anmeldenummer: 95109404.4
(22) Anmeldetag: 17.06.1995
(51) Int. Cl.: F16K 11/00, G05D 23/13

(54) **Sanitäres Thermostatventil**
Sanitary thermostatic valve
Vanne thermostatique sanitaire

(30) Priorität: 20.07.1994 DE 4425584
(43) Veröffentlichungstag der Anmeldung: 21.02.1996
(73) Patentinhaber: HANSA METALLWERKE AG, D-70567 Stuttgart (DE)
(72) Erfinder: Weinmann, Werner, D-70794 Filderstadt (DE)
(74) Vertreter: Ostertag, Ulrich

(56) Entgegenhaltungen:
- EP-A- 0 461 536
- DE-A- 4 237 435

## Beschreibung

Die Erfindung betrifft ein sanitäres Thermostatventil mit
a) einem Armaturengehäuse, welches einen Anschluß für Kaltwasser, einen Anschluß für Warmwasser und einen Auslaß für Mischwasser aufweist;
b) einem in dem Armaturengehäuse angeordneten, von dem Mischwasser beaufschlagten temperaturempfindlichen Regelelement;
c) einem von dem Regelelement verstellbaren Ventilelement, das an gegenüberliegenden Enden jeweils mit einem ortsfesten Armaturenteil einen Regelspalt für Kalt- und Warmwasser begrenzt;
d) einer Überlast-Sicherheitseinrichtung, an welcher sich das Regelelement abstützt und die eine zwischen zwei Federtellern eingespannte, verhältnismäßig starre Druckfeder umfaßt, die bei Auftreten einer Übertemperatur am Regelelement unter axialer Bewegung eines Federtellers komprimiert werden kann;
e) eine Temperatur-Vorwähleinrichtung, welche eine von einem Drehgriff betätigbare, am Armaturengehäuse axial verschraubbare Schraubbuchse umfaßt, mit welcher die axiale Position des Regelelementes veränderbar ist,
wobei
f) der dem Regelelement zugewandte Federteller der Überlast-Sicherheitseinrichtung zur Ein justierung einer zu einer bestimmten Drehstellung des Drehgriffes gehörenden Solltemperatur des Mischwassers mit Hilfe eines Schraubbolzens axial verstellbar ist.

Sanitäre Thermostatventile enthalten eine Temperatur-Vorwähleinrichtung, mit welcher jeweils die dem Benutzer angenehme, konstantzuhaltende Mischwassertemperatur eingestellt werden kann. Diese umfaßt eine über einen Drehgriff verdrehbare Schraubbuchse, die gegenüber dem Armaturengehäuse axial verstellt werden kann und dabei die axiale Position des temperaturempfindlichen Regelelementes, im allgemeinen eines Dehnstoffelementes, gegenüber den beiden feststehenden Ventilsitzen im Armaturengehäuse verändert.

Eine zweite Einrichtung, welche praktisch alle Thermostatventile enthält, ist eine sogenannte "Überlast-Sicherheitseinrichtung". Mit dieser hat es folgende Bewandtnis: Wenn der Regelspalt zwischen dem Ventilelement und dem Warmwassersitz bereits geschlossen ist, wegen einer von dem Regelelement verspürten Übertemperatur jedoch das Regelelement das Ventilelement noch weiter auf den Warmwassersitz zu verschieben sucht, könnte es zu einer Beschädigung des Regelelementes kommen. Deshalb stützt sich das Regelelement an einer Seite axial gegen eine zwischen zwei Federtellers eingespannte relativ starre Druckfeder ab. Im oben geschilderten Falle einer vom Regelelement gespürten Übertemperatur kann so einer der beiden Federteller unter axialer Kompression der Druckfeder der Überlast-Sicherheitseinrichtung axial bewegt werden, wodurch sich Beschädigungen des Regelelementes vermeiden lassen. Ist der Zustand mit Übertemperatur abgeklungen, entspannt sich die Druckfeder der Überlast-Sicherheitseinrichtung wieder. Im Normalbetrieb des Thermostatventiles kann die Überlast-Sicherheitseinrichtung wegen der verhältnismäßig großen Federkonstante der in ihr enthaltenen Druckfeder praktisch als starrer Körper aufgefaßt werden.

Bei vielen sanitären Thermostatventilen stehen Temperatur-Vorwähleinrichtung und Überlast-Sicherheitseinrichtung funktional miteinander in folgender Weise in Wechselwirkung: Der Drehgriff der Temperatur-Vorwähleinrichtung ist mit einer in Grad Celsius ausgedrückten Skala versehen, so daß der Benutzer die von ihm gewünschte Solltemperatur des aus dem Thermostatventil ausfließenden Mischwassers direkt in Grad Celsius vorwählen kann. Hierzu bedarf es jedoch einer Ein justierung der axialen Position des Regelelementes, damit tatsächlich der von der Skala angezeigte Wert mit der Auslauftemperatur des Mischwassers übereinstimmt. Diese Ein justierung erfolgt nunmehr dadurch, daß die Überlast-Sicherheitseinrichtung innerhalb des Armaturengehäuses nicht fest steht sondern daß zumindest ihr dem Regelelement zugewandter Federteller axial mit Hilfe eines Schraubbolzens bewegt werden kann. Auf diese Weise läßt sich das Regelelement axial verstellen, ohne über den Drehgriff der Temperatur-Vorwähleinrichtung und die mit diesem verbundene Schraubbuchse diese Axialbewegung bewirken zu müssen.

Bei bekannten sanitären Thermostatventilen der eingangs genannten Art (Siehe z.B. EP 0 461 536 A) erfolgt die axiale Verstellung der Überlast-Sicherheitseinrichtung auf folgende Weise: Die Überlast-Sicherheitseinrichtung ist insgesamt in eine Hülse eingebördelt, welche die beiden Federteller und die zwischen diesen eingespannte Druckfeder enthält. Die Hülse ihrerseits ist im Innenraum der Schraubbuchse der Temperatur-Vorwähleinrichtung angeordnet und gegenüber dieser axial beweglich. Der Schraubbolzen ist durch den Boden der becherförmigen Schraubbuchse hindurchgeschraubt und liegt mit seiner äußeren Stirnfläche am äußeren Federteller der Überlast-Sicherheitseinrichtung an. Wird dieser Schraubbolzen weiter nach innen gedreht, so wird die gesamte Überlast-Sicherheitseinrichtung, die in diesem Zusammenhang als starrer Körper zu verstehen ist, innerhalb der Schraubbuchse der Temperatur-Vorwähleinrichtung nach innen gedrückt, eine Bewegung, welche das Regelelement aufgrund seiner Anlage an der Überlast-Sicherheitseinrichtung mitmacht. Wird der Schraubbolzen im entgegengesetzten Drehsinne, also nach außen gedreht, wird die Überlast-Sicherheitseinrichtung durch die Rückstellfeder des Regelelementes wieder nach außen gedrückt und bleibt in ständiger Anlage an der inneren Stirnfläche des Schraubbolzens.

Um eine unbeabsichtigte Dejustierung der Temperatur-Vorwähleinrichtung durch eine Verdrehung des Schraubbolzens gegenüber der Schraubbuchse zu verhindern, ist eine kleine Stellschraube radial durch den Boden der Schraubbuchse hindurchgedreht, liegt mit ihrem inneren Ende gegen den Schraubbolzen an und fixiert diesen so. Die Einbringung einer radial verlaufenden Gewindebohrung in die Schraubbuchse ist jedoch insbesondere dann mit Schwierigkeiten verbunden, wenn diese, einem Trend in der modernen Armaturentechnologie folgend, aus Kunststoff hergestellt werden soll.

Aufgabe der vorliegenden Erfindung ist es, ein Thermostatventil der eingangs genannten Art so auszugestalten, daß die Sicherung des Schraubbolzens gegen eine unbeabsichtigte Verdrehung und damit eine Dejustierung der Temperatur-Vorwähleinrichtung ohne Stellschraube erfolgen kann.

Diese Aufgabe wird erfindungsgemäß dadurch gelöst, daß der Schraubbolzen
g) durch den äußeren, dem Regelelement abgewandten Federteller sowie durch die Druckfeder der Überlast-Sicherheitseinrichtung axial frei beweglich hindurchgeführt ist;
h) in eine Gewindebohrung des inneren, dem Regelelement zugewandten, unverdrehbar gehaltenen Federtellers eingeschraubt ist;
i) über einen im Durchmesser vergrößerten Kopf zur Anlage an der äußeren Stirnfläche des äußeren Federtellers ausgebildet ist.

Bei der erfindungsgemäßen Anordnung steht der Schraubbolzen, welcher die gesamte Überlast-Sicherheitseinrichtung axial durchsetzt, stets unter einer Zugspannung. Diese rührt von der Druckfeder der Sicherheitseinrichtung her, welche ihrerseits die beiden Federteller auseinanderzudrücken sucht. Diese Zugspannung, welche von dem Gewinde des inneren Federtellers auf den Schraubbolzen übertragen wird, dient als Verdrehsicherung, verhindert also eine unbeabsichtigte Verdrehung des Schraubbolzens, ohne daß es hierfür eines gesonderten Teiles, z.B. einer Stellschraube, bedürfte. Diese Ausgestaltung der Überlast-Sicherheitseinrichtung eignet sich also insbesondere für solche Thermostatventile, die weitgehend aus Kunststoff hergestellt sind. Ein weiterer Vorteil der Erfindung ist darin zu sehen, daß die Überlast-Sicherheitseinrichtung nicht mehr durch eine äußere Hülse zu einer Einheit zusammengefaßt zu werden braucht, da der axiale Zusammenhalt der beiden Federteller und der sich zwischen diesen erstreckenden Druckfeder bereits durch den Schraubbolzen gewährleistet ist.

Eine besonders bevorzugte Ausführungsform der Erfindung zeichnet sich dadurch aus, daß
a) die Gewindebohrung des inneren Federtellers als Durchgangsbohrung ausgebildet ist;
b) das Regelelement sich an der inneren Stirnfläche des Schraubbolzens abstützt;
c) der im Durchmesser vergrößerte Kopf an einer eine axiale Gewindebohrung enthaltenden Schraubbuchse ausgebildet ist, durch welche der Schraubbolzen hindurch geschraubt ist und die den äußeren Federteller axial frei beweglich durchsetzt.

Bei dieser Ausgestaltung der Erfindung bewegt sich der innere, also dem Regelelement zugewandte, Federteller zur Einjustierung der Temperatur-Vorwähleinrichtung nicht. Der Schraubbolzen, mit dem die Justierung erfolgt, läßt sich nämlich durch den axial feststehenden Federteller hindurchschrauben und beaufschlagt direkt mit seiner eigenen, inneren Stirnfläche das Regelelement. Damit die Axialbewegung des Schraubbolzens nicht von einer Axialbewegung des äußeren Federtellers begleitet wird, ist der im Durchmesser vergrößerte Kopf, über welchen sich der Schraubbolzen am äußeren Federteller abstützt, an einer gesonderten Schraubbuchse angebracht, durch welche der Schraubbolzen ebenfalls hindurchschraubbar ist. Der Schraubbolzen läßt sich also auf diese Weise gegenüber der Überlast-Sicherheitseinrichtung vollständig frei axial verschrauben, ohne daß die Vorspannung der Druckfeder in der Überlast-Sicherheitseinrichtung verändert würde. Spricht die Überlast-Sicherheitseinrichtung an, so wird der innere Federteller gemeinsam mit dem Schraubbolzen axial von dem Regelelement wegbewegt. Dies ist deshalb möglich, weil die den vergrößerten Kopf bildende Schraubbuchse axial frei beweglich durch den äußeren Federteller hindurchgeführt ist. Von der Funktion her ist dieses Ausführungsbeispiel optimal, erfordert jedoch mit der den vergrößerten Kopf bildenden Schraubbuchse ein zusätzliches Teil.

Der Kopf der Schraubbuchse sollte bei dieser Ausgestaltung unverdrehbar geführt sein, damit der Schraubbolzen selbst problemlos axial innerhalb der Schraubbuchse verstellt werden kann.

Vorteilhaft ist, wenn in die äußere Stirnfläche des Schraubbolzens eine Angriffsfläche für ein Drehwerkzeug eingeformt ist.

Wenn nach einem bevorzugten Merkmal der vorliegenden Erfindung der äußere Federteller als Formteil mit einem sich axial erstreckenden zylindrischen Bereich und einem radialen Flansch ausgestaltet ist, ist die den vergrößerten Kopf umfassende Schraubbuchse innerhalb des äußeren Federtellers optimal geführt.

Ein in der Herstellung etwas einfacheres Ausführungsbeispiel der Erfindung sieht so aus, daß
a) das Regelelement sich an dem inneren Federteller abstützt;
b) der im Durchmesser vergrößerte Kopf einstückig an dem Schraubbolzen angeformt ist.

Bei dieser Ausführungsform ist also die gesonderte Schraubbuchse, welche den vergrößerten Kopf bildet, entbehrlich. Der Schraubbolzen wirkt zur Ein justierung der Temperatur-Vorwähleinrichtung nur mittelbar über den inneren Federteller der Überlast-Sicherheitseinrichtung auf das Regelelement ein. Dies hat allerdings den kleinen Nachteil, daß zur Einjustierung der Temperatur-Vorwähleinrichtung eine Axialbewegung des inneren Federtellers erforderlich ist, daß also hierbei die Vorspannung der Druckfeder in der Überlast-Sicherheitseinrichtung verändert wird. Dieser Effekt kann aber in der Regel so klein gehalten werden, daß er ohne negative praktische Auswirkungen bleibt.

Bei dieser Ausgestaltung sollte die Gewindebohrung des inneren Federtellers als Sackbohrung ausgebildet sein, da sich im allgemeinen das Regelelement über einen axialen Druckstift kleinen Durchmessers an dem Federteller abstützt. Eine unmittelbare Wechselwirkung zwischen Schraubbolzen und Regelelement ist auf diese Weise ausgeschlossen.

Vorteilhaft bei der zweitgenannten Ausführungsform der Erfindung ist weiter, daß der äußere Federteller als ebener Ring ausgebildet sein kann. Dies ist selbstverständlich verhältnismäßig preiswert.

Im allgemeinen ist die Überlast-Sicherheitseinrichtung bei Thermostatventilen der eingangs genannten Art im Innenraum der Schraubbuchse der Temperatur-Vorwähleinrichtung angeordnet. In diesem Falle kann der Außenumfang des inneren Federtellers unrund ausgebildet sein und mit einer entsprechend unrunden Innenwand der Schraubbuchse als Verdrehsicherung zusammenwirken.

Wenn der axial innere Begrenzungsrand der Schraubbuchse nach innen umgebördelt ist, ist die im Innenraum der Schraubbuchse untergebrachte Überlast-Sicherheitseinrichtung vor der endgültigen Montage des Thermostatventiles gegen Verlust gesichert.

Ausführungsbeispiele der Erfindung werden nachfolgend anhand der Zeichnung näher erläutert; es zeigen
- Figur 1: im Axialschnitt denjenigen Endbereich eines sanitären Thermostatventiles, in welchem die Temperatur-Vorwähleinrichtung und die Überlast-Sicherheitseinrichtung untergebracht sind;
- Figur 2: einen Axialschnitt, ähnlich der Figur 1, durch ein zweites Ausführungsbeispiel der Erfindung.

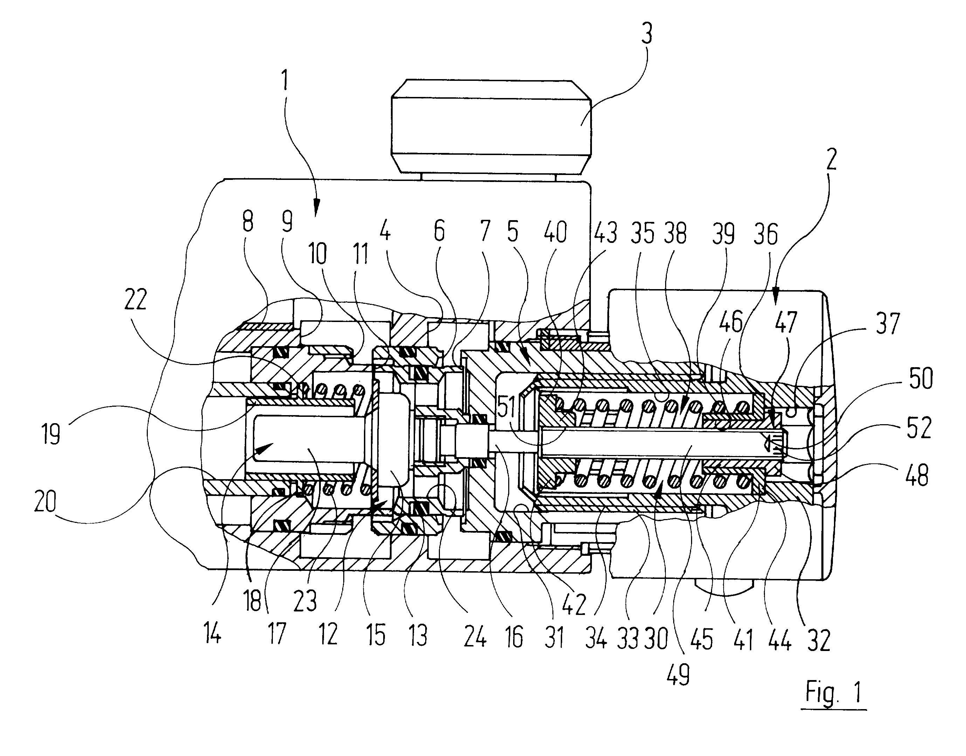

In Figur 1 ist in einem im wesentlichen horizontalen Teilschnitt ein Endbereich eines sanitären Aufputz-Thermostatventiles dargestellt. Dabei handelt es sich um diejenige Ausgestaltung, welche ein längliches, im wesentlichen rohrförmiges Armaturengehäuse 1 aufweist, das sich im Montagezustand entlang der Installationswand erstreckt. An beiden Stirnseiten des Armaturengehäuses 1 ist jeweils ein Drehgriff 2 vorgesehen. Der in der Montagestellung linke Drehgriff (in der Zeichnung nicht dargestellt) dient im allgemeinen der Einstellung der Menge des das Thermostatventil verlassenden Mischwassers, während mit Hilfe des in der Montagestellung rechten Drehgriffes 2, welcher in der Zeichnung erkennbar ist, in noch zu beschreibender Weise die Vorwahl der Temperatur des Mischwassers vorgenommen wird.

Zwei Anschlußstutzen 3, von denen in der Zeichnung nur einer erkennbar ist, dienen dem Anschluß des Thermostatventiles an die Hausleitungen. Über den in der Zeichnung erkennbaren, rechten Anschlußstutzen 3 strömt Kaltwasser in einen im Armaturengehäuse 1 vorgesehenen Zuflußraum 4 und von dort durch radiale Öffnungen 6 eines dicht in das Armaturengehäuse 1 eingepaßten Einsatzes 5 zu einem an dem Einsatz 5 ausgebildeten Kaltwassersitz 7.

Das Warmwasser strömt aus der entsprechenden Hausleitung über den in der Zeichnung nicht dargestellten, linken Anschlußstutzen in einen achsparallelen innerhalb des Armaturengehäuses 1 verlaufenden Kanal 8 und von dort in einen Zulaufraum 9. Von diesem fließt das Warmwasser über weitere radiale Öffnungen 10 des Einsatzes 5 zu einem Warmwassersitz 11.

Kaltwassersitz 7 und Warmwassersitz 11 des Einsatzes 5 wirken mit einem axial beweglichen Ventilelement 12, in diesem Falle einem Doppelventilkegel, zusammen, das in seinem mittleren Bereich durch einen O-Ring 13 gegen den Einsatz 5 abgedichtet ist.

Der Doppelventilkegel 12 steht über seinen radial inneren Bereich bewegungsschlüssig mit einem temperaturempfindlichen Regelelement in Verbindung, welches insgesamt mit dem Bezugszeichen 14 versehen ist. Dieses ist im vorliegenden Falle als an und für sich bekanntes Dehnstoffelement ausgeführt und umfaßt ein im Durchmesser vergrößertes Hauptgehäuse 15, in welchem eine den Dehnstoffraum an einer Seite begrenzende Membran untergebracht ist, die auf einen aus dem Hauptgehäuse 15 ausgeführten Druckstift 16 wirkt.

Auf der dem Druckstift 16 gegenüberliegenden Seite schließt sich an das Hauptgehäuse 15 des Dehnstoffelementes 14 über eine radiale Stufe 18 ein im Durchmesser verringertes Dehnstoffkammergehäuse 17 an, welches die Hauptmasse des Dehnstoffes enthält. Das Dehnstoffkammergehäuse 17 ragt in eine hohlzylindrische Abflußbuchse 19 hinein, welche den Anfangsbereich des Abströmweges für das Mischwasser bildet. Dieses gelangt aus der Abflußbuchse 19 in eine sich axial innerhalb des Armaturengehäuses 1 erstreckende Abflußleitung 20 und von dort zu dem in der Zeichnung nicht mehr dargestellten Auslauf. Dieser steht seinerseits beispielsweise mit einer Handbrause oder einem Wannenauslauf in Verbindung.

Zwischen dem Dehnstoffelement 14 und einem radialen Flansch 22 der Abflußbuchse 19, der sich in axialer Richtung am Einsatz 5 abstützt, ist eine als Rückstellfeder für das Dehnstoffelement 14 dienende Druckfeder 23 verspannt.

Der Druckstift 16 des Dehnstoffelementes 14 stützt sich an einer Temperatur-Vorwähleinrichtung ab, die insgesamt das Bezugszeichen 30 trägt. Diese ist in einem becherförmigen Hohlraum 31 im in der Zeichnung rechten, teilweise über das Armaturengehäuse 1 überstehenden Endbereich des Einsatzes 5 untergebracht.

Die Temperatur-Vorwähleinrichtung 30 umfaßt eine Schraubbuchse 32, die mit einem Außengewinde 33 in ein entsprechendes Innengewinde 34 an der Zylindermantelfläche der Öffnung 31 des Einsatzes 5 eingeschraubt ist. An ihrem aus der Öffnung 31 des Einsatzes 5 herausragenden, in der Zeichnung rechten Ende, steht die Schraubbuchse 32 in hier nicht näher interessierender Weise in Mitnahmeverbindung mit dem Drehgriff 2, derart, daß die Schraubbuchse 32 durch Drehen des Drehgriffs 2 axial innerhalb der Öffnung 31 des Einsatzes 5 verstellt werden kann.

Die Schraubbuchse 32 ist ein Hohlteil mit einem größeren, in der Zeichnung links dargestellten, im wesentlichen zylindrischen Innenraum 35, an den sich - in der Zeichnung nach rechts - über eine radiale Stufe 36 eine Mehrkant-Durchgangsöffnung 37 anschließt.

Der im wesentlichen zylindrische Innenraum 35 der Schraubbuchse 32 enthält eine Überlast-Sicherheitseinrichtung, die insgesamt das Bezugszeichen 38 trägt. Diese umfaßt eine verhältnismäßig steife Druckfeder 39, die zwischen zwei Federtellern 40 und 41 verspannt ist.

Der in der Zeichnung linke, also auf der Innenseite des Thermostatventiles angeordnete Federteller 40 umfaßt einen radialen Flansch 42, an welchem sich die Druckfeder 39 axial abstützt, sowie einen axial verlaufenden zylindrischen Bereich 43, über welchen die Druckfeder 39 geschoben ist und der diese so zentriert.

In entsprechender Weise umfaßt der in der Figur rechte, also zur Außenseite des Thermostatventiles weisende Federteller 41 einen radialen Flansch 44 auf, an dessen inneren Stirnfläche sich die Druckfeder 39 abstützt und der mit seiner äußeren Stirnfläche an der Stufe 36 der Schraubbuchse 32 anliegt. Die Druckfeder 39 ist dabei über einen sich axial erstreckenden zylindrischen Bereich 45 des Federtellers 41 geschoben und wird so zentriert.

Der in der Zeichnung rechte Federteller 41 enthält eine Axialbohrung 46, an welcher die glatte Außenmantelfläche einer Schraubbuchse 47 anliegt. Diese weist einen im Durchmesser vergrößerten Mehrkantkopf 48 auf, welcher seinerseits an der äußeren Stirnfläche des radialen Flansches 44 des Federtellers 41 anliegt. Aufgrund der komplementären Mehrkantformen der Durchgangsöffnung 37 der Schraubbuchse 32 und des Mehrkantkopfes 48 der Schraubbuchse 47 sind die Schraubbuchsen 32 und 47 nicht gegeneinander verdrehbar.

Ein Schraubbolzen 49 ist durch ein Innengewinde 50 der Schraubbuchse 47 hindurch geschraubt, durchsetzt die Druckfeder 39 axial und ist mit seinem in der Zeichnung linken Ende in ein Innengewinde 51 des linken Federtellers 40 eingedreht.

Der Schraubbolzen 49 ist an seiner in der Zeichnung rechten, also äußeren Stirnseite, mit einer Mehrkant-Öffnung 52 versehen, an welcher ein Drehwerkzeug, beispielsweise ein Mehrkantschlüssel, angesetzt werden kann.

Die in der Zeichnung linke, also innere Stirnfläche des Schraubbolzens 49 liegt an der äußeren Stirnfläche des Druckstiftes 16 des Dehnstoffelementes 14 an.

Die Funktionsweise des oben beschriebenen Thermostatventiles ist wie folgt:

Warmwasser strömt, wie bereits oben erwähnt, über den Warmwasserkanal 8 und den Zulaufraum 9 im Armaturengehäuse 1 und durch die Öffnungen 10 des Einsatzes 5 hindurch zu dem Regelspalt, der einerseits von dem Warmwassersitz 11 und andererseits von der in der Zeichnung linken Stirnseite des Doppelventilkegels 12 gebildet wird. Je nach der Axialstellung des Doppelventilkegels 12 fließt mehr oder weniger Warmwasser in das Innere des Einsatzes 5 hinein und, geführt durch den von der Druckfeder 23 umgebenen Bereich der Abflußbuchse 19, an dem Dehnstoffkammergehäuse 17 entlang zur Abflußleitung 20 und von dort zum Auslauf.

Das Kaltwasser fließt, wie ebenfalls oben schon angedeutet, über den in der Zeichnung dargestellten Anschlußstutzen 3 zum Zuflußraum 4, durch die Öffnungen 6 des Einsatzes 5 hindurch zu dem Regelspalt, der einerseits von dem Kaltwassersitz 7 und andererseits von der in Figur 1 rechten Stirnseite des Doppelventilkegels 12 gebildet wird. Je nach der Axialstellung des Doppelventilkegels 12 strömt mehr oder weniger Kaltwasser in den Innenraum des Einsatzes 5, von dort in den Innenraum des Doppelventilkegels 12 und über achsparallele Öffnungen 24 des Doppelventilkegels 12 durch diesen hindurch.

Veränderungen in der Temperatur und/oder dem Druck (damit der pro Zeiteinheit zufließenden Menge) von Kalt- und Warmwasser werden in an und für sich bekannter Weise von dem Dehnstoffelement 14 durch entsprechende Bewegungen des Doppelventilkegels 12 kompensiert, so daß über die Abflußleitung 20 Mischwasser mit einer bestimmten, vorgewählten Temperatur ausfließt. Diese Temperatur wird durch die axiale Position der äußeren Stirnfläche des Druckstiftes 16 bestimmt, die ihrerseits durch die Temperatur-Vorwähleinrichtung 30 eingestellt werden kann. Wird nämlich durch Verdrehen des Drehgriffes 2 die Schraubbuchse 32 gegenüber dem Einsatz 5 axial verstellt, so folgt die äußere Stirnfläche des Druckstiftes 16 und damit das gesamte Dehnstoffelement 14 dieser Axialbewegung aufgrund der Anlage des Druckstifts 16 an dem ein Teil der Temperatur-Vorwähleinrichtung 30 bildenden Schraubbolzen 49. Die Druckfeder 39 ist sehr viel steifer als die Druckfeder 23, welche als Rückstellfeder des Dehnstoffelementes 14 dient. Das heißt: Die Temperatur-Vorwähleinrichtung 30 mit ihrer Überlast-Sicherheitseinrichtung 38 kann im Normalbetrieb des Thermostatventiles als "starr" aufgefaßt werden. Nur in denjenigen Fällen, in denen der Doppelventilkegel 12 durch Anlage an dem Warmwassersitz 11 unbeweglich geworden ist und sich gleichwohl der Druckstift 16 weiter aus dem Dehnstoffelement 14 herauszuschieben sucht, wird der Federteller 40 der Überlast-Sicherheitseinrichtung 38 unter Kompression der Druckfeder 39 in der Zeichnung nach rechts, also weiter in den zylindrischen Innenraum 35 der Schraubbuchse 32 gedrückt. Dieser Axialbewegung des in der Zeichnung linken Federtellers 40 kann der in der Zeichnung rechte Federteller 41 aufgrund seiner Anlage an der radialen Stufe 36 der Schraubbuchse 32 nicht folgen. Die Schraubbuchse 47 dagegen, welche über den Schraubbolzen 49 mit dem linken Federteller 40 verbunden ist, verschiebt sich entsprechend in axialer Richtung, gleitet also etwas aus der in der Zeichnung dargestellten Position nach rechts heraus, so daß zwischen dem Kopf 48 der Schraubbuchse 47 und der äußeren Stirnfläche des rechten Federtellers 41 ein Zwischenraum verbleibt. Auf diese Weise wird für den Druckstift 16 ein Freiheitsgrad geschaffen, ohne den eine Beschädigung des Dehnstoffelementes 14 drohen würde.

Soll die Temperatur-Vorwähleinrichtung 30 einjustiert werden, so wird der Schraubbolzen 49 durch Ansetzen eines Drehwerkzeuges verdreht. Die innere Stirnfläche des Schraubbolzens 49 bewegt sich dabei axial, eine Bewegung, welcher die an ihr anliegende Stirnfläche des Druckstiftes 16 und damit das gesamte Dehnstoffelement 14 folgen. Bei feststehendem Drehgriff 2 kann auf diese Weise die Temperatur des auslaufenden Mischwassers so lange verändert werden, bis diese der angezeigten Skalenstellung des Drehgriffes 2 entspricht.

Bei der beschriebenen Ausgestaltung wird der Schraubbolzen 49 offensichtlich durch die Druckfeder 39 der Überlast-Sicherheitseinrichtung 38 stets in der Zeichnung nach links gezogen. Dieser Zug wirkt als Verdrehsicherung zwischen dem Schraubbolzen 49 und dem Federteller 41, so daß - ohne zusätzliche Elemente wie Feststellschrauben und dergleichen - eine unbeabsichtigte Verdrehung des Schraubbolzens 49 und damit eine Dejustierung der Temperatur-Vorwähleinrichtung 30 nicht möglich sind.

Das oben beschriebene Ausführungsbeispiel von Figur 1 zeichnet sich dadurch aus, daß bei der Justierung der Temperatur-Vorwähleinrichtung die Vorspannung der Druckfeder 39 innerhalb der Überlast-Sicherheitseinrichtung unverändert bleibt. Diese Eigenschaft geht auf zwei konstruktive Merkmale zurück: Erstens stützt sich der Druckstift 16 des Dehnstoffelementes 14 unmittelbar an der Stirnseite des Schraubbolzens 49 und nicht an dem inneren Federteller 40 ab. Zweitens kann der Schraubbolzen 49 gegenüber dem in Figur 1 rechten Federteller 41 aufgrund der Schraubbuchse 47 eine Axialbewegung durchführen. Die letztgenannte Schraubbuchse 47 ist selbstverständlich mit gewissen Kosten verbunden.

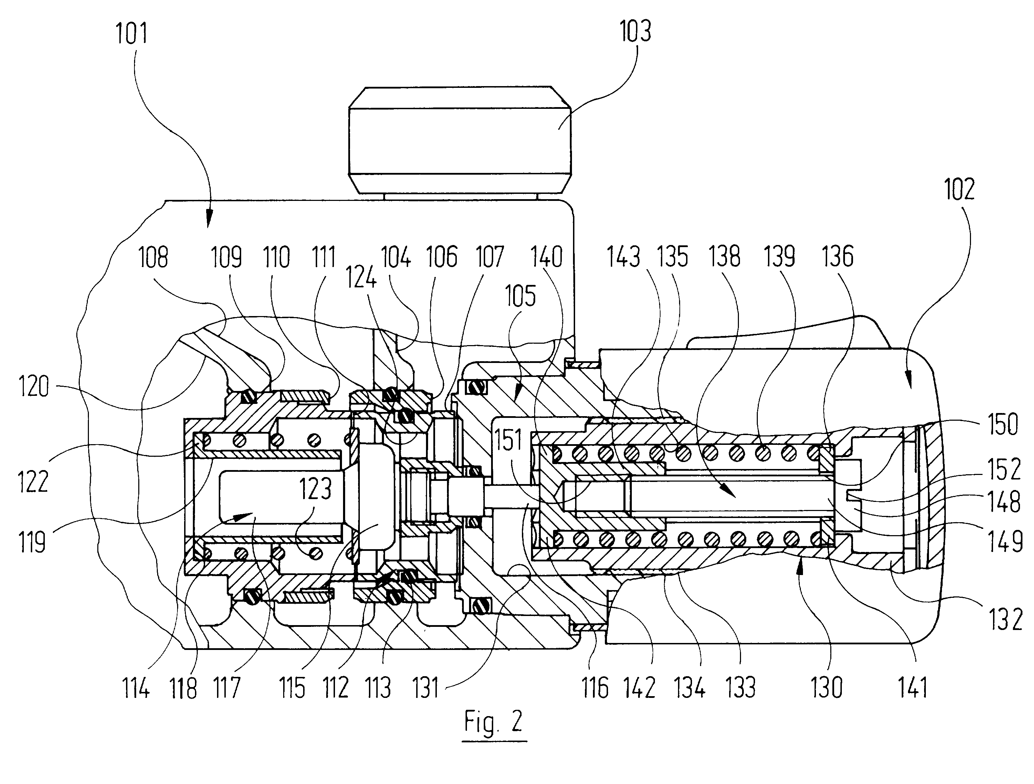

Ist man bereit, eine geringfügige Änderung der Vorspannung der Druckfeder der Überlast-Sicherheitseinrichtung in Kauf zu nehmen, so kommt die in Figur 2 dargestellte Ausführungsform eines Thermostatventiles in Frage, die etwas preisgünstiger ist. Dieses Ausführungsbeispiel ähnelt demjenigen von Figur 1 weitgehend; entsprechende Teile sind daher mit demselben Bezugszeichen, zuzüglich 100, gekennzeichnet.

Unterschiedlich beim Ausführungsbeispiel von Figur 2 gegenüber demjenigen von Figur 1 ist nur die Ausgestaltung der Überlast-Sicherheitseinrichtung 138. Auf die Beschreibung der anderen Teile wird daher verzichtet und statt dessen auf die entsprechenden Beschreibungsteile für das Ausführungsbeispiel von Figur 1 verwiesen.

Die Überlast-Sicherheitseinrichtung 138 des Ausführungsbeispieles von Figur 2 ist wiederum innerhalb der Schraubbuchse 132 untergebracht, die Teil der Temperatur-Vorwähleinrichtung 130 und mit dem Drehgriff 102 drehschlüssig verbunden ist. Sie umfaßt eine Druckfeder 139, die zwischen einem linken Federteller 140 und einem rechten Federteller 141 eingespannt ist.

Der in Figur 2 rechte, also zur Armaturen-Außenseite zeigende Federteller 141 ist - anders als der Federteller 41 der Figur 1 - als einfacher Ring ausgebildet. Er stützt sich an einer radialen Stufe 136 des Innenraumes 135 der Schraubbuchse 132 ab.

Der in Figur 2 linke, also zur Armaturen-Innenseite weisende Federteller 140 ist ähnlich wie der Federteller 40 von Figur 1 mit einem radialen Flansch 142 und einem zylindrischen Bereich 143 versehen. Der Federteller 140 enthält eine Gewindebohrung 151, die jedoch - anders als das Ausführungsbeispiel von Figur 1 - als Sackbohrung ausgestaltet ist. Der Umfangsbereich des radialen Flansches 142 des Federtellers 140 ist wiederum als Mehrkantfläche geformt und wirkt mit einer entsprechenden Mehrkantfläche an der Innenwand des Innenraumes 135 der Schraubbuchse 132 zusammen, derart, daß der Federteller 140 sich innerhalb der Schraubbuchse 132 axial bewegen, nicht jedoch verdrehen kann.

Ein Schraubbolzen 149 ist durch die innere Bohrung 150 des Federtellers 141 (die keine Gewindebohrung ist) hindurchgeführt und liegt mit seinem im Durchmesser vergrößerten Kopf 148 an der äußeren Stirnfläche des Federtellers 141 an. Der Gewindeschaft des Schraubbolzens 149 ist in die Gewinde-Sackbohrung 151 des Federtellers 140 eingedreht.

Der Druckstift 116 des Dehnstoffelementes 114 wird durch die Druckfeder 123, die das Rückstellelement des Dehnstoffelementes 114 ist, in Anlage an der in Figur 2 nach links zeigenden, also inneren Stirnfläche des Federtellers 140 gehalten.

Das in Figur 2 dargestellte sanitäre Thermostatventil funktioniert wie folgt:

Zur Justierung des Thermostatventiles auf eine bestimmte Temperatur in einer vorgegebenen Drehstellung des Drehgriffes 102 wird der Schraubbolzen 149 verdreht, indem an dem Schlitz 152 seines Kopfes 148 ein normaler Schraubendreher angesetzt wird. Bei der Verdrehung des Schraubbolzens 149 bleibt der in Figur 2 rechte Federteller 141 in Anlage an der Schulter 136, wird also axial nicht bei wegt. Je nach Drehsinn der Drehbewegung des Schraubbolzens 149 wird jedoch der in Figur 2 linke Federteller 140 axial nach rechts oder links geführt, eine Axialbewegung, welcher das Dehnstoffelement 114 unter Entlastung bzw. zusätzlicher Spannung der Druckfeder 123 folgt. Auf diese Weise läßt sich diejenige Stellung für das Dehnstoffelement 114 finden, bei welcher in der entsprechenden Drehstellung des Drehgriffes 102 die gewünschte Temperatur, im allgemeinen 38C, ausfließt. Ersichtlich wird bei diesem Justiervorgang die Vorspannung der Druckfeder 139 der Überlast-Sicherheitseinrichtung 130 verändert, da der Abstand zwischen den beiden Federtellern 140 und 141 verändert wird. Dies ist jedoch in den meisten Fällen für die praktische Funktion des Thermostatventiles ohne Bedeutung.

Tritt bei bereits geschlossenem Warmwasser-Regelspalt eine weitere Temperaturerhöhung an dem Dehnstoffelement 114 auf, so schiebt der sich dann weiter aus dem Dehnstoffelement 114 herausbewegende Druckstift 116 den Federteller 140 der Überlast-Sicherheitseinrichtung 138 nach rechts, wobei sich die Druckfeder 139 spannt und der Schaft des Schraubbolzens 149 sich durch die Mittelöffnung des Federtellers 141 hindurchschiebt, derart, daß der Kopf 148 des Schraubbolzens 149 nunmehr einen Abstand von der äußeren Stirnfläche des Federtellers 141 aufweist. Sobald der Zustand der Übertemperatur abgeklungen ist, wird der linke Federteller 140 durch die Druckfeder 139 wieder in ihre Normalposition zurückgeführt.

## Patentansprüche

1. Sanitäres Thermostatventil mit
a) einem Armaturengehäuse, welches einen Anschluß für Kaltwasser, einen Anschluß für Warmwasser und einen Auslaß für Mischwasser aufweist;
b) einem in dem Armaturengehäuse angeordneten, von dem Mischwasser beaufschlagten temperaturempfindlichen Regelelement;
c) einem von dem Regelelement verstellbaren Ventilelement, das an gegenüberliegenden Enden jeweils mit einem ortsfesten Armaturenteil einen Regelspalt für Kalt- und Warmwasser begrenzt;
d) einer Überlast-Sicherheitseinrichtung, an welcher sich das Regelelement abstützt und die eine zwischen zwei Federtellern eingespannte, verhältnismäßig starre Druckfeder umfaßt, die bei Auftreten einer Übertemperatur am Regelelement unter axialer Bewegung eines Federtellers komprimiert werden kann;
e) eine Temperatur-Vorwähleinrichtung, welche eine von einem Drehgriff betätigbare, am Armaturengehäuse axial verschraubbare Schraubbuchse umfaßt, mit welcher die axiale Position des Regelelementes veränderbar ist,
wobei
f) der dem Regelelement zugewandte Federteller der Überlast-Sicherheitseinrichtung zur Einjustierung einer zu einer bestimmten Drehstellung des Drehgriffes gehörenden Solltemperatur des Mischwassers mit Hilfe eines Schraubbolzens axial verstellbar ist,
dadurch gekennzeichnet, daß der Schraubbolzen (49; 149)
g) durch den äußeren, dem Regelelement (14; 114) abgewandten Federteller (41; 141) sowie durch die Druckfeder (39; 139) der Überlast-Sicherheitseinrichtung (38, 138) axial frei beweglich hindurchgeführt ist;
h) in eine Gewindebohrung (51; 151) des inneren, dem Regelelement (14; 114) zugewandten, unverdrehbar gehaltenen Federtellers (40; 140) eingeschraubt ist;
i) über einen im Durchmesser vergrößerten Kopf (48; 148) zur Anlage an der äußeren Stirnfläche des äußeren Federtellers (41; 141) ausgebildet ist.

2. Sanitäres Thermostatventil nach Anspruch 1, dadurch gekennzeichnet, daß
a) die Gewindebohrung (51) des inneren Federtellers (40) als Durchgangsbohrung ausgebildet ist;
b) das Regelelement (14) sich an der inneren Stirnfläche des Schraubbolzens (49) abstützt;
c) der im Durchmesser vergrößerte Kopf (48) an einer eine axiale Gewindebohrung enthaltenden Schraubbuchse (47) ausgebildet ist, durch welche der Schraubbolzen (49) hindurchgeschraubt ist und die den äußeren Federteller (41) axial frei beweglich durchsetzt.

3. Sanitäres Thermostatventil nach Anspruch 2, dadurch gekennzeichnet, daß der Kopf (48) der Schraubbuchse (47) unverdrehbar geführt ist.

4. Sanitäres Thermostatventil nach Anspruch 2 oder 3, dadurch gekennzeichnet, daß in die äußere Stirnfläche des Schraubbolzens (49) eine Angriffsfläche für ein Drehwerkzeug eingeformt ist.

5. Sanitäres Thermostatventil nach einem der Ansprüche 2 bis 4, dadurch gekennzeichnet, daß der äußere Federteller (41) als Formteil mit einem sich axial erstreckenden zylindrischen Bereich (45) und einem radialen Flansch (44) ausgestaltet ist.

6. Sanitäres Thermostatventil nach Anspruch 1, dadurch gekennzeichnet, daß
a) das Regelelement (114) sich an dem inneren Federteller (140) abstützt;
b) der im Durchmesser vergrößerte Kopf (147) einstückig an den Schraubbolzen (149) angeformt ist.

7. Sanitäres Thermostatventil nach Anspruch 6, dadurch gekennzeichnet, daß die Gewindebohrung (151) des inneren Federtellers (140) als Sackbohrung ausgebildet ist.

8. Sanitäres Thermostatventil nach Anspruch 6 oder 7, dadurch gekennzeichnet, daß der äußere Federteller (141) als ebener Ring ausgebildet ist.

9. Sanitäres Thermostatventil nach einem der vorhergehenden Ansprüche, bei welchem die Überlast-Sicherheitseinrichtung im Innenraum der Schraubbuchse der Temperatur-Vorwähleinrichtung angeordnet ist,
dadurch gekennzeichnet, daß
der Außenumfang des inneren Federtellers (40, 140) unrund ausgebildet ist und mit einer entsprechend unrunden Innenwand der Schraubbuchse (32; 132) als Verdrehsicherung zusammenwirkt.

10. Sanitäres Thermostatventil nach Anspruch 8, dadurch gekennzeichnet, daß der axial innere Begrenzungsrand der Schraubbuchse (32; 132) nach innen umgebördelt ist.

## Claims

1. Sanitary thermostatic valve having
a) a fitting housing, which has a connection for cold water, a connection for hot water and a connection for mixed water;
b) a temperature-sensitive control element disposed in the fitting housing and acted upon by the mixed water;
c) a valve element, which is displaceable by the control element and at opposite ends in each case with a stationary fitting part delimits a control gap for cold and hot water;
d) an overload safety device, against which the control element is supported and which comprises a relatively rigid compression spring, which is clamped between two spring retainers and, in the event of an excess temperature at the control element, may be compressed with simultaneous axial movement of a spring retainer;
e) a temperature selecting device comprising a threaded bush, which is operable by a turning handle and is screwable axially on the fitting housing and may be used to vary the axial position of the control element,
wherein
f) the spring retainer of the overload safety device directed towards the control element is axially displaceable with the aid of a screw bolt for the purpose of adjusting a setpoint temperature of the mixed water associated with a specific rotary position of the turning handle,
characterized in that the screw bolt (49; 149)
g) is conveyed in an axially freely movable manner through the outer spring retainer (41; 141) remote from the control element (14; 114) as well as through the compression spring (39; 139) of the overload safety device (38, 138);
h) is screwed into a threaded bore (51; 151) of the inner, non-rotatably supported spring retainer (40; 140) directed towards the control element (14; 114);
i) is, by means of an enlarged-diameter head (48; 148), designed to be applied against the outer end face of the outer spring retainer (41; 141).

2. Sanitary thermostatic valve according to claim 1, characterized in that
a) the threaded bore (51) of the inner spring retainer (40) takes the form of a through-bore;
b) the control element (14) is supported against the inner end face of the screw bolt (49);
c) the enlarged-diameter head (48) is formed on a threaded bush (47) containing an axial threaded bore, through which the screw bolt (49) is screwed and which in an axially freely movable manner penetrates the outer spring retainer (41).

3. Sanitary thermostatic valve according to claim 2, characterized in that the head (48) of the threaded bush (47) is guided in a non-rotatable manner.

4. Sanitary thermostatic valve according to claim 2 or 3, characterized in that a working surface for a turning tool is formed in the outer end face of the screw bolt (49).

5. Sanitary thermostatic valve according to one of claims 2 to 4, characterized in that the outer spring retainer (41) takes the form of a shaped part having an axially extending cylindrical region (45) and a radial flange (44).

6. Sanitary thermostatic valve according to claim 1, characterized in that
a) the control element (114) is supported against the inner spring retainer (140);
b) the enlarged-diameter head (147) is formed integrally on the screw bolt (149).

7. Sanitary thermostatic valve according to claim 6, characterized in that the threaded bore (151) of the inner spring retainer (140) takes the form of a blind bore.

8. Sanitary thermostatic valve according to claim 6 or 7, characterized in that the outer spring retainer (141) takes the form of a flat ring.

9. Sanitary thermostatic valve according to one of the preceding claims, wherein the overload safety device is disposed in the interior of the threaded bush of the temperature selecting device,
characterized in that
the outer periphery of the inner spring retainer (40, 140) is non-circular and cooperates with a correspondingly non-circular inner wall of the threaded bush (32; 132) as an anti-rotation device.

10. Sanitary thermostatic valve according to claim 8, characterized in that the axially inner delimiting edge of the threaded bush (32; 132) is flanged inwards.

## Revendications

1. Robinet thermostatique sanitaire comprenant
a) un corps de robinet qui présente un raccord d'arrivée d'eau froide, un raccord d'arrivée d'eau chaude et une sortie d'eau mitigée;
b) un élément de réglage sensible à la température, disposé dans le corps de robinet et sur lequel agit l'eau mitigée;
c) un obturateur déplaçable par l'élément de réglage et délimitant sur des extrémités opposées, chaque fois en coopération avec une partie fixe du robinet, une fente de réglage pour l'eau froide et une fente de réglage pour l'eau chaude;
d) une sécurité de surcharge sur laquelle s'appuie l'élément de réglage et qui comprend un ressort de compression relativement rigide serré entre deux cuvettes de ressort, ressort qui peut être comprimé, ce qui s'accompagne d'un mouvement axial d'une cuvette de ressort, s'il se produit une surtempérature sur l'élément de réglage; et
e) un présélecteur de température qui comprend une douille filetée mobile axialement sur le corps de robinet par vissage ou dévissage et manoeuvrable par un bouton tournant, au moyen de laquelle la position axiale de l'élément de réglage peut être variée,
robinet dans lequel
f) la cuvette de ressort dirigée vers l'élément de réglage de la sécurité de surcharge est déplaçable axialement à l'aide d'une vis en vue du tarage ou de l'ajustement d'une température de consigne de l'eau mitigée coordonnée à une position angulaire déterminée du bouton tournant,
caractérisé en ce que la vis (49; 149)
g) est passée librement mobile axialement à travers la cuvette de ressort extérieure (41; 141), éloignée de l'élément de réglage (14; 114), ainsi qu'à travers le ressort de compression (39; 139) de la sécurité de surcharge (38; 138);
h) est vissée dans un trou fileté (51; 151) de la cuvette de ressort intérieure (40; 140), dirigée vers l'élément de réglage (14; 114) et maintenue immobile en rotation; et
i) est réalisée pour s'appliquer contre la face d'extrémité extérieure de la cuvette de ressort extérieure (41, 141) par une tête (48; 148) de plus grand diamètre.

2. Robinet thermostatique sanitaire selon la revendication 1, caractérisé en ce que
a) le trou fileté (51) de la cuvette de ressort intérieure (40) est réalisé comme un trou traversant;
b) l'élément de réglage (14) s'appuie sur la face d'extrémité intérieure de la vis (49); et
c) la tête (48) de plus grand diamètre est formée sur une douille filetée (47) contenant un trou axial fileté, à travers de laquelle est vissée la vis (49) et qui traverse librement mobile axialement la cuvette de ressort extérieure (41).

3. Robinet thermostatique sanitaire selon la revendication 2, caractérisé en ce que la tête (48) de la douille filetée (47) est guidée sans pouvoir tourner.

4. Robinet thermostatique sanitaire selon la revendication 2 ou 3, caractérisé en ce qu'une surface d'attaque pour un outil de rotation est formée dans la face d'extrémité extérieure de la vis (49).

5. Robinet thermostatique sanitaire selon une des revendications 2 à 4, caractérisé en ce que la cuvette de ressort extérieure (41) est réalisée comme une pièce façonnée possédant une partie cylindrique (45) orientée axialement et une bride radiale (44).

6. Robinet thermostatique sanitaire selon la revendication 1, caractérisé en ce que
a) l'élément de réglage (114) s'appuie sur la cuvette de ressort intérieure (140); et
b) la tête (147) de plus grand diamètre est formée d'un seul tenant avec la vis (149).

7. Robinet thermostatique sanitaire selon la revendication 6, caractérisé en ce que le trou fileté (151) de la cuvette de ressort intérieure (140) est réalisé comme un trou borgne.

8. Robinet thermostatique sanitaire selon la revendication 6 ou 7, caractérisé en ce que la cuvette de ressort extérieure (141) est réalisée comme une rondelle plate.

9. Robinet thermostatique sanitaire selon une des revendications précédentes, sur lequel la sécurité de surcharge est agencée dans l'espace intérieur de la douille filetée du présélecteur de température, caractérisé en ce que le pourtour de la cuvette de ressort intérieure (40; 140) possède une forme non-circulaire et coopère, en tant que dispositif empêchant la rotation, avec une paroi interne de forme non-circulaire correspondante de la douille filetée (32; 132).

10. Robinet thermostatique sanitaire selon la revendication 8, caractérisé en ce que le bord de délimitation axialement intérieur de la douille filetée (32; 132) est rabattu vers l'intérieur.
